# EUROPÄISCHE PATENTSCHRIFT

(11) **EP 1 238 197 B1**
(45) Veröffentlichungstag und Bekanntmachung des Hinweises auf die Patenterteilung: **09.11.2005**
(21) Anmeldenummer: 00977540.4
(22) Anmeldetag: 15.11.2000
(51) Int. Cl.: F04B 53/16, H02K 5/24

(54) **ANORDNUNG ZUR DÄMPFUNG DES VON EINEM MOTOR/PUMPEN-AGGREGAT AUSGEHENDEN SCHALLS**
SYSTEM FOR INSULATING THE SOUND EMANATING FROM A MOTOR/PUMP UNIT
DISPOSITIF POUR AMORTIR LE BRUIT PRODUIT PAR UN GROUPE MOTOPOMPE

(30) Priorität: 14.12.1999 DE 19960224
(43) Veröffentlichungstag der Anmeldung: 11.09.2002
(73) Patentinhaber: Bosch Rexroth AG, 97816 Lohr am Main (DE)
(72) Erfinder: DANTLGRABER, Jörg, 97816 Lohr am Main (DE); KNOLLINGER, Ernst, A-4061 Pasching (AT)
(86) Internationale Anmeldenummer: PCT/EP2000/011269
(87) Internationale Veröffentlichungsnummer: WO 2001/044663

(56) Entgegenhaltungen:
- AU-B- 537 360
- DE-A- 1 938 813
- DE-A- 1 962 667
- DE-C- 3 602 135
- JP-A- 4 076 277
- US-A- 2 973 716
- US-A- 4 432 528
- PATENT ABSTRACTS OF JAPAN vol. 018, no. 164 (M-1579), 18. März 1994 (1994-03-18) & JP 05 332254 A (MITSUBISHI HEAVY IND LTD), 14. Dezember 1993 (1993-12-14)

## Beschreibung

Die Erfindung betrifft eine Anordnung zur Dämpfung des von einem Motor/Pumpen-Aggregat, das von gasförmigem Medium umgeben ist, ausgehenden Schalls mit einer ebenfalls von gasförmigem Medium umgebenen schalldämmenden Abdeckung für das Motor/Pumpen-Aggregat.

Eine derartige Anordnung ist aus der US-PS 5 354 182 bekannt. Das Motor/Pumpen-Aggregat ist von einer schalldämmenden Abdeckung umschlossen. Das Motor/Pumpen-Aggregat und die schalldämmende Abdeckung sind aneinander gehalten. An das Gehäuse des Motors sind Winkel geschraubt, die zur Befestigung des Motor/Pumpen-Aggregats an einer Unterlage dienen. Eine derartige Anordnung dämmt zwar den von dem Motor/Pumpen-Aggregat abgegebenen Luftschall, der von dem Motor/Pumpen-Aggregat ausgehende Körperschall wird jedoch auf die Abdeckung übertragen und nach außen abgestrahlt. Dabei wirkt die den Luftschall dämmende Abdeckung wie die Membran eines Lautsprechers. Das bedeutet, daß umso mehr Schall abgestrahlt wird, je größer die Oberfläche der Abdeckung ist.

Aus der DE-OS 19 62 667 ist ein Motor/Pumpen-Aggregat bekannt, das im Innenraum eines mit hydraulischer Flüssigkeit gefüllten Behälters angeordnet ist. Das Motor/Pumpen-Aggregat ist so an einer den Behälter abschließenden Abdeckung aufgehängt, daß es vollständig von der Flüssigkeit umgeben ist. Zwischen den seitlichen Wänden des Behälters und dem Motor/Pumpen-Aggregat ist eine von Flüssigkeit umgebene, nach unten offene haubenförmige Abschirmung aus mindestens teilweise schallschluckendem Material angeordnet.

Der Erfindung liegt die Aufgabe zugrunde, eine Anordnung der eingangs genannten Art zu schaffen, die nicht nur den Luftschall sondern auch den Körperschall dämpft.

Diese Aufgabe wird durch die im Anspruch 1 gekennzeichneten Merkmale gelöst. Da sich das Motor/Pumpen-Aggregat und die Schalldämmhaube im Betriebszustand nicht berühren, wird der Körperschall des Motor/Pumpen-Aggregats nicht auf die Schalldämmhaube übertragen. Da aber andererseits das Motor/Pumpen-Aggregat und die Schalldämmhaube während des Transports aneinander abgestützt sind, können sie auf einfache Weise gemeinsam transportiert werden.

Vorteilhafte Weiterbildungen der Erfindung sind in den Unteransprüchen gekennzeichnet. Die Mitnehmer für den gemeinsamen Transport von Motor/Pumpen-Aggregat und Schalldämmhaube sind in vorteilhafter Weise so ausgebildet, daß beim Transport das Motor/Pumpen-Aggregat an der Schalldämmhaube gehalten ist oder daß die Schalldämmhaube an dem Motor/Pumpen-Aggregat gehalten ist. Werden die Mitnehmer derart ausgebildet, daß sie beim Anheben selbstzentrierend ineinandergreifen, können das Motor/Pumpen-Aggregat und die Schalldämmhaube beim Transport nicht gegeneinander verrutschen. Es ist vorteilhaft, den einen Mitnehmer mit einer kegelstumpfförmigen Außenfläche und den anderen Mitnehmer mit einer entsprechenden kegelstumpfförmigen Innenfläche zu versehen. Als zusätzliche Rüttelsicherung ist eine Schraubverbindung vorgesehen, die durch die Mitnehmer geführt ist. Wird die Schraubverbindung kopfseitig mit Transportösen versehen, erhält man auf einfache Weise Angriffspunkte für ein Hebezeug.

Die Erfindung wird im folgenden mit ihren weiteren Einzelheiten anhand eines in den Zeichnungen dargestellten Ausführungsbeispiels näher erläutert. Es zeigen
- Figur 1: eine erste Anordnung zur Dämpfung des von einem Motor/Pumpen-Aggregat ausgehenden Schalls in schematischer Darstellung,
- Figur 2: eine zweite Anordnung zur Dämpfung des von einem Motor/Pumpen-Aggregat ausgehenden Schalls in schematischer Darstellung,
- Figur 3: eine detaillierte Darstellung der in der Figur 2 dargestellten Anordnung und
- Figur 4: eine Einzelheit der in der Figur 3 dargestellten Anordnung.

Gleiche Bauteile sind mit den gleichen Bezugszeichen versehen.

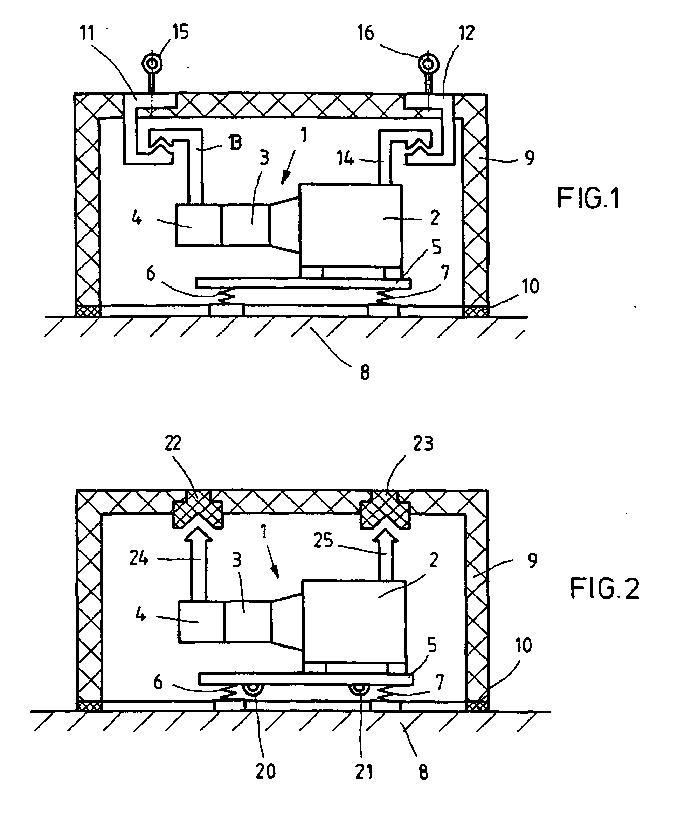

Die Figur 1 zeigt eine erste Anordnung zur Dämpfung des von einem Motor/Pumpen-Aggregat 1 ausgehenden Schalls gemäß der Erfindung in schematischer Darstellung. An einem Elektromotor 2 sind zwei Pumpen 3 und 4 mechanisch gehalten. Die Pumpen 3 und 4 werden von dem Elektromotor 2 angetrieben. Der Elekromotor 2 ist an einer Grundplatte 5 gehalten. Die Grundplatte 5 ist über elastische Befestigungsmittel, die hier als Federn 6 und 7 dargestellt sind, an einer nur schematisch dargestellten Unterlage 8 gehalten. Bei der Unterlage 8 kann es sich z. B. um einen Boden in einem Gebäude handeln, in dem das Motor/Pumpen-Aggregat aufgestellt ist, oder um das Gestell einer Maschine, in die das Motor/Pumpen-Aggregat integriert ist. Über das Motor/Pumpen-Aggregat 1 ist eine Schalldämmhaube 9 gestülpt, die das Motor/Pumpen-Aggregat 1 umgibt ohne es zu berühren. Die Schalldämmhaube 9 dämpft den Luftschall des Motor/Pumpen-Aggregats 1. Zwischen der Schalldämmhaube 9 und der Unterlage 8 ist eine umlaufende streifenförmige Zwischenschicht 10 angeordnet. Die Zwischenschicht 10 besteht aus einem elastischen Material, wie z. B. Gummi oder Schaumstoff. Sie dient zur Schalldämpfung zwischen der Unterlage 8 und der Schalldämmhaube 9. Mit der Schalldämmhaube 9 sind winkelförmige Mitnehmer 11 und 12 verbunden. Weitere winkelförmige Mitnehmer 13 und 14 sind an dem Gehäuse der Pumpe 4 bzw. an dem Gehäuse des Elektromotors 2 gehalten. Die Mitnehmer 11 bis 14 sind mit Führungen versehen; die beim Anheben der Schalldämmhaube 9 selbstzentrierend ineinander greifen. Die Mitnehmer 11 und 12 sind zusätzlich mit Transportösen 15 bzw. 16 versehen. Im Betriebszustand der erfindungsgemäßen Anordnung, der in der Figur 1 dargestellt ist, stützen sich das Motor/Pumpen-Aggregat 1 und die Schalldämmhaube 9 jeweils für sich an der Unterlage 8 ab. Die Schalldämmhaube 9 ist dabei über das Motor/Pumpen-Aggregat 1 gestülpt, ohne dieses zu berühren. Sollen das Motor/Pumpen-Aggregat 1 und die Schalldämmhaube 9 transportiert werden, wird zunächst die Schalldämmhaube 9 an den Transportösen 15 und 16 angehoben, bis die Mitnehmer 11 und 13 sowie die Mitnehmer 12 und 14 zum Eingriff kommen. Dabei sorgen die selbstzentrierend ausgebildeten Führungsflächen der Mitnehmer 11 bis 14 für eine definierte Lage des Motor/Pumpen-Aggregats 1 in Bezug auf die Schalldämmhaube 9. Wird die Anordnung wieder abgesenkt, kommt zuerst das Motor/Pumpen-Aggregat 1 auf der Unterlage 8 zur Auflage. Beim weiteren Absenken der Schalldämmhaube 9 kommen die Mitnehmer 11 und 13 sowie 12 und 14 außer Eingriff und die Schalldämmhaube 9 kommt dann ebenfalls zur Auflage auf der Unterlage 8.

Die Figur 2 zeigt eine zweite Anordnung zur Dämpfung des von einem Motor/Pumpen-Aggregat 1 ausgehenden Schalls gemäß der Erfindung in schematischer Darstellung. Wie in der Figur 1 sind an dem Elektromotor 2 die Pumpen 3 und 4 mechanisch gehalten und von diesem angetrieben. Die Grundplatte 5, an der der Elektromotor 2 gehalten ist, ist mit vier Ösen versehen, von denen in der Figur 2 nur die mit den Bezugszeichen 20 und 21 versehenen Ösen sichtbar sind. Sie verdecken zwei weitere Ösen. Die Ösen dienen zur Aufnahme von Stangen, mit denen das Motor/Pumpen-Aggregat 1, wie z. B. bei einer Sänfte, angehoben und transportiert wird. Die Schalldämmhaube 9 ist auch hier so über das Motor/Pumpen-Aggregat 1 gestülpt, daß sie dieses umgibt, ohne es zu berühren. An der Schalldämmhaube 9 sind Mitnehmer 22 und 23 gehalten. Weitere Mitnehmer 24 und 25 sind an dem Gehäuse der Pumpe 4 bzw. an dem Gehäuse des Elektromotors 2 gehalten. Die Mitnehmer 22 bis 25 sind mit Führungen versehen, die beim Anheben des Motor/Pumpen-Aggregats 1 selbstzentrierend ineinander greifen. Im Betriebszustand der erfindungsgemäßen Anordnung, der in der Figur 2 dargestellt ist, stützen sich das Motor/Pumpen-Aggregat 1 und die Schalldämmhaube 9 jeweils für sich an der Unterlage 8 ab ohne einander zu berühren. Sollen das Motor/Pumpen-Aggregat 1 und die Schalldämmhaube 9 transportiert werden, wird die Schalldämmhaube 9 an gegenüberliegenden Seiten geöffnet, so daß durch die Ösen 20 und 21 Stangen geschoben werden können. Die Stangen werden so weit angehoben, bis der Mitnehmer 22 auf dem Mitnehmer 24 und der Mitnehmer 23 auf dem Mitnehmer 25 aufliegen. Dabei sorgen die selbstzentrierend ausgebildeten Führungsflächen der Mitnehmer 22 bis 25 für eine definierte Lage des Motor/Pumpen-Aggregats 1 in Bezug auf die Schalldämmhaube 9. Wird die Anordnung wieder abgesenkt, kommt zuerst die Schalldämmhaube 9 auf der Unterlage 8 zur Auflage. Beim weiteren Absenken des Motor/Pumpen-Aggregats 1 kommen die Mitnehmer 22 und 24 sowie 23 und 25 außer Eingriff und das Motor/Pumpen-Aggregat 1 kommt dann ebenfalls zur Auflage auf der Unterlage 8.

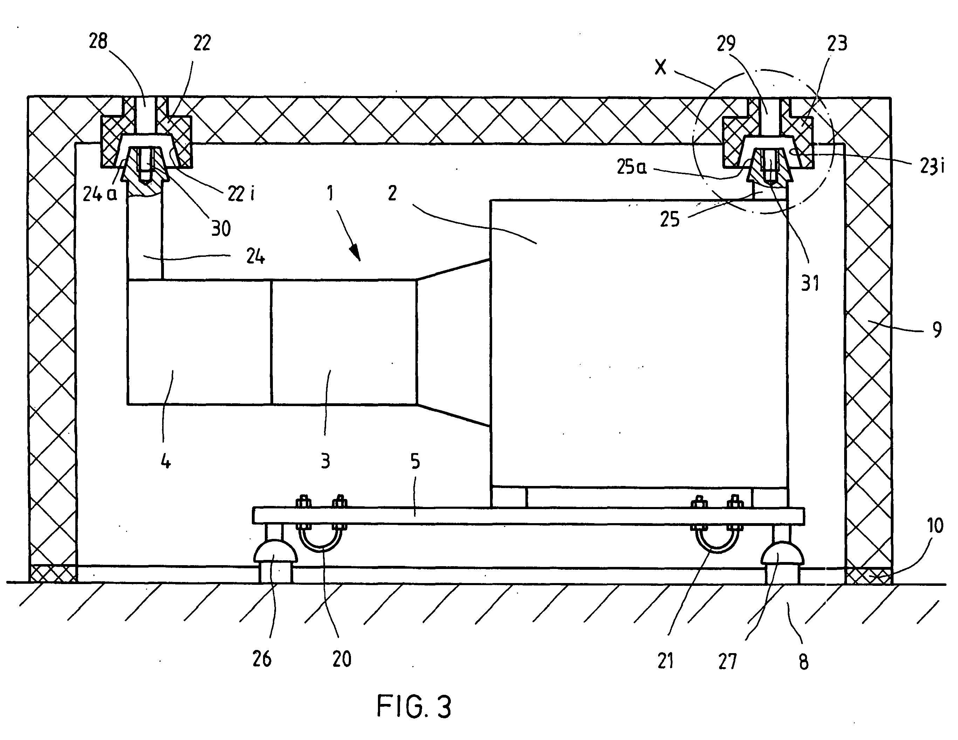

Die Figur 3 zeigt eine detailliertere Darstellung der Anordnung gemäß der Figur 2, insbesondere hinsichtlich der Ausgestaltung der Mitnehmer 22 bis 25. Die Grundplatte 5 ist in diesem Ausführungsbeispiel über Dämpfungslager, von denen in der Figur 3 nur die Dämpfungslager 26 und 27 sichtbar sind, an der Unterlage gehalten. Dämpfungslager dienen zur elastischen Befestigung von Bauteilen. Die Mitnehmer 22 und 23 sind als Mitnehmerhülsen mit kegelstumpfförmiger Innenfläche 22i bzw. 23i ausgebildet. Die Mitnehmer 24 und 25 sind als Mitnehmerbolzen mit kegelstumpfförmiger Außenfläche 24a bzw. 25a ausgebildet. Wird die Grundplatte 5 - wie oben beschrieben - angehoben, greifen der Mitnehmerbolzen 24 in die Mitnehmerhülse 22 und der Mitnehmerbolzen 25 in die Mitnehmerhülse 23. Dabei werden die kegelstumpfförmigen Außenflächen 24a und 25a der Mitnehmerbolzen 24 und 25 selbstzentrierend von den kegelstumpfförmigen Innenflächen 22i und 23i der Mitnehmerhülsen 22 und 23 umfaßt. Diese Ausgestaltung der Mitnehmer 22 bis 25 verhindert ein seitliches Verrutschen der Schalldämmhaube 9 gegenüber dem Motor/Pumpen-Aggregat. Die Mitnehmerhülsen 22 und 23 sind mit zentralen Durchgangsbohrungen 28 bzw. 29 versehen. Die Mitnehmerbolzen 24 und 25 sind jeweils mit einem Innengewinde 30 bzw. 31 versehen. Durch die Durchgangsbohrungen 28 und 29 geführte Schrauben, die in die Innengewinde 30 bzw. 31 geschraubt sind, halten das Motor/Pumpen-Aggregat 1 in der angehobenen Lage fest an der Schalldämmhaube 9. Wenn das Motor/Pumpen-Aggregat 1 mit der Schalldämmhaube 9 verschraubt ist, können die Stangen, mit denen das Motor/Pumpen-Aggregat 1 angehoben worden ist, entfernt werden.

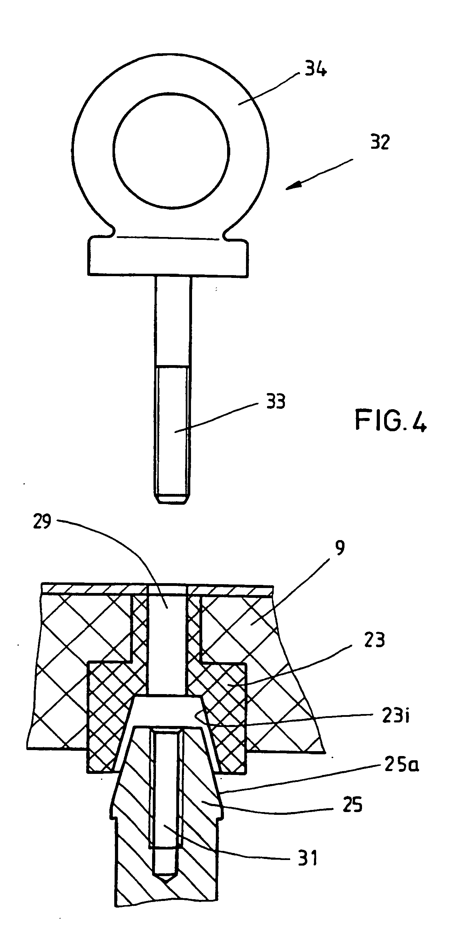

In der Figur 4 ist die in der Figur 3 angegebene Einzelheit X in vergrößertem Maßstab dargestellt. Die Figur 4 zeigt einen Ausschnitt der Schalldämmhaube 9, die Mitnehmerhülse 23, den Mitnehmerbolzen 25 und eine Schraube 32. Die Schraube 32 ist mit einem Außengewinde 33 versehen. Der Kopf der Schraube 32 ist als Transportöse 34 ausgebildet. Ist das Motor/Pumpen-Aggregat 1 angehobenen, liegt die Mitnehmerhülse 23 auf dem Mitnehmerbolzen 25 auf. Wird die Schraube 32 durch die Durchgangsbohrung 29 in der Mitnehmerhülse 23 geführt und in das Innengewinde 31 des Mitnehmerbolzens 25 geschraubt, ist das Motor/Pumpen-Aggregat 1 fest an der Schalldämmhaube 9 gehalten. In gleicher Weise ist eine weitere, in der Figur 3 nicht dargestellte Schraube durch die Durchgangsbohrung 28 der Mitnehmerhülse 22 geführt und in das Innengewinde 30 des Mitnehmerbolzens 24 geschraubt. Auch bei Erschütterungen während des Transports ist das Motor/Pumpen-Aggregat 1 nun sicher an der Schalldämmhaube 1 gehalten. Die durch die Ösen 20 und 21 geführten Stangen, mit denen das Motor/Pumpen-Aggregat 1 angehoben worden ist, können jetzt entfernt werden. Zum Transportieren der aus Motor/Pumpen-Aggregat 1 und Schallhaube 9 bestehenden Anordnung greift ein hierfür vorgesehenes Hebezeug an den Transportösen 34 an.

## Patentansprüche

1. Anordnung zur Dämpfung des von einem Motor/Pumpen-Aggregat, das von gasförmigem Medium umgeben ist, ausgehenden Schalls mit einer ebenfalls von gasförmigem Medium umgebenen schalldämmenden Abdeckung für das Motor/Pumpen-Aggregat,
**dadurch gekennzeichnet,**
- **daß** die schalldämmende Abdeckung als Schalldämmhaube (9) ausgebildet ist,
- **daß** die Schalldämmhaube (9) und das Motor/Pumpen-Aggregat (1) mit Mitnehmern (11 bis 14; 22 bis 25) versehen sind,
- **daß** die Schalldämmhaube (9) und das Motor/Pumpen-Aggregat (1) während des Transports der Anordnung über die Mitnehmer (11 bis 14; 22 bis 25) aneinander gehalten sind und
- **daß** die Schalldämmhaube (9) im Betriebszustand bei voneinander getrennten Mitnehmern (11 bis 14; 22 bis 25) über das Motor/Pumpen-Aggregat (1) gestülpt ist, ohne dieses zu berühren.

2. Anordnung nach Anspruch 1, **dadurch gekennzeichnet, daß** die Mitnehmer (11 bis 14) derart an dem Motor/Pumpen-Aggregat (1) und an der Schalldämmhaube (9) angeordnet sind, daß das Motor/Pumpen-Aggregat (1) beim Anheben der Schalldämmhaube (9) an dieser gehalten ist.

3. Anordnung nach Anspruch 1, **dadurch gekennzeichnet, daß** die Mitnehmer (22 bis 25) derart an dem Motor/Pumpen-Aggregat (1) und an der Schalldämmhaube (9) angeordnet sind, daß die Schalldämmhaube (9) beim Anheben des Motor/Pumpen-Aggregats (1) an diesem gehalten ist.

4. Anordnung nach einem der Ansprüche 1 bis 3, **dadurch gekennzeichnet, daß** die Mitnehmer (11 bis 14; 22 bis 25) beim Anheben selbstzentrierend ineinander greifen.

5. Anordnung nach Anspruch 4, **dadurch gekennzeichnet, daß** die Mitnehmer (22 bis 25) aus je einem Mitnehmerbolzen (24; 25) mit kegelstumpfförmiger Außenfläche (24a; 25a) und einer Mitnehmerhülse (22; 23) mit kegelstumpfförmiger Innenfläche (22i; 23i) gebildet sind.

6. Anordnung nach Anspruch 5, **dadurch gekennzeichnet, daß** die Mitnehmerhülse (22; 23) mit einer Durchgangsbohrung (28; 29) versehen ist und der Mitnehmerbolzen (24; 25) mit einem Innengewinde (30; 31) versehen ist.

7. Anordnung nach Anspruch 6, **dadurch gekennzeichnet, daß** die Schalldämmhaube (9) und das Motor/Pumpen-Aggregat (1) beim Transport mit durch die Mitnehmer (23, 25) geführte Schrauben (32) aneinander gehalten sind.

8. Anordnung nach Anspruch 7, **dadurch gekennzeichnet, daß** die Schrauben (32) kopfseitig mit einer Transportöse (34) versehen sind.

## Claims

1. An arrangement for absorbing the sound emanating from a motor/pump unit, which is surrounded by a gaseous medium, having a sound-deadening cover, also surrounded by a gaseous medium, for the motor/pump unit, **characterized by the fact that**
- the sound-deadening cover is constructed as a sound-deadening hood (9),
- the sound-deadening hood (9) and the motor/pump unit (1) are provided with catches (11 to 14; 22 to 25),
- the sound-deadening hood (9) and the motor/pump unit (1) are held against each other by the catches (11 to 24; 22 to 25) during transport of the arrangenient, and
- in the operating condition, when the catches (11 to 14; 22 to 25) are disengaged, the sound-deadening hood (9) is placed over the motor/pump unit (1) without touching the latter.

2. An arrangement according to claim 1, **characterized by the fact that** the catches (11 to 14), are arranged on the motor/pump unit (1) and on the sound-deadening hood (9) in such a manner that the motor/pump unit (1) is held to the sound-deadening hood (9) as the latter is raised.

3. An arrangement according to claim 1, **characterized by the fact that** the catches (22 to 25), are arranged on the motor/pump unit (1) and on the sound-deadening hood (9) in such a manner that the sound-deadening hood (9) is held to the motor/pump unit (1) as the latter is raised.

4. An arrangement according to claims 1 to 3, **characterized by the fact that** the catches (11 to 14; 22 to 25) engage in one another in a self-centring manner during the raising operation.

5. An arrangement according to claim 4, **characterized by** the fact that the catches (22 to 25) are each formed by a catch pin (24; 25) with a frustoconical outer surface (24a; 25a) and a catch sleeve (22; 23) with a frustoconical inner surface (22i; 23i).

6. An arrangement according to claim 5, **characterized by** the fact that the catch sleeve (22; 23) is provided with a through hole (28; 29), and the catch pin (24; 25) is provided with an internal thread (30; 31).

7. An arrangement according to claim 6, **characterized by** the fact that the sound-deadening hood (9) and the motor/pump unit (1) are held against one another during transport by means of screws (32) passed through the catches (23, 25).

8. An arrangement according to claim 7, **characterized by** the fact that the screws (32) are provided with a transport lug (34) at the head end.

## Revendications

1. Un dispositif pour l'amortissement du bruit généré par un groupe moto-pompe, baignant dans un fluide gazéiforme, à l'aide d'une couverture insonorisante du groupe moto-pompe, elle aussi baignant dans un fluide gazéiforme,
**caractérisé en ce**
- **que** la couverture insonorisante est conçue sous forme de capot (9) insonorisant,
- **que** le capot (9) insonorisant et le groupe moto-pompe (1) sont pourvus de tenons (11 à 14 ; 22 à 25) d'entraînement,
- **que**, pendant le transport du dispositif, le capot (9) insonorisant et le groupe moto-pompe (1) sont maintenus l'un contre l'autre par les tenons (11 à 14 ; 22 à 25) d'entraînement et
- **que**, pendant le fonctionnement, le capot (9) insonorisant chapeaute complètement le groupe moto-pompe (1), sans entrer en contact avec celui-ci, cependant que les tenons (11 à 14 ; 22 à 25) d'entraînement sont séparés les uns des autres.

2. Un dispositif selon la revendication n° 1, **caractérisé en ce que** les tenons (11 à 14) d'entraînement sont disposés sur le groupe moto-pompe (1) et sur le capot (9) insonorisant de façon telle, que le groupe moto-pompe (1) est maintenu au niveau du capot (9) insonorisant, lorsque celui-ci est levé.

3. Un dispositif selon la revendication n° 1, **caractérisé en ce que** les tenons (22 à 25) d'entraînement sont disposés sur le groupe moto-pompe (1) et sur le capot (9) insonorisant de façon telle, que le capot (9) insonorisant est maintenu au niveau du groupe moto-pompe (1), lorsque celui-ci est levé.

4. Un dispositif selon une des revendications n° 1 à n° 3, **caractérisé en ce que** les tenons (11 à 14; 22 à 25) d'entraînement prennent les uns dans les autres avec centrage automatique lors du levage.

5. Un dispositif selon la revendication n° 4, **caractérisé en ce que** les tenons (22 à 25) d'entraînement sont constitués d'un boulon (24 ; 25) d'entraînement chacun, doté d'une surface (24a ; 25a) extérieure de forme conique tronquée, et d'une douille (22 ; 23) d'entraînement chacun, dotée d'une surface (22i ; 23i) intérieure de forme conique tronquée.

6. Un dispositif selon la revendication n° 5, **caractérisé en ce que** la douille (22 ; 23) d'entraînement est dotée d'un alésage (28 ; 29) transversal et le boulon (24; 25) d'entraînement est doté d'un filetage (30; 31) intérieur.

7. Un dispositif selon la revendication n° 6, **caractérisé en ce que** des vis (32) passées par les tenons (23, 25) d'entraînement maintiennent le capot (9) insonorisant et le groupe moto-pompe (1) l'un contre l'autre pendant le transport.

8. Un dispositif selon la revendication n° 7, **caractérisé en ce que** les vis (32) sont dotées d'un oeillet (34) de transport côté tête.
